# EUROPÄISCHE PATENTSCHRIFT

(11) **EP 3 785 094 B1**
(45) Veröffentlichungstag und Bekanntmachung des Hinweises auf die Patenterteilung: **27.04.2022**
(21) Anmeldenummer: 19709478.2
(22) Anmeldetag: 06.03.2019
(51) Int. Cl.: G05D 7/01

(54) **DURCHFLUSSMENGENREGLER**
FLOW RATE CONTROLLER
RÉGULATEUR DE DÉBIT

(30) Priorität: 27.04.2018 DE 202018102383 U
(43) Veröffentlichungstag der Anmeldung: 03.03.2021
(73) Patentinhaber: Neoperl GmbH, 79379 Müllheim (DE)
(72) Erfinder: KIM, Seoung-Eun, 79189 Bad Krozingen (DE)
(74) Vertreter: Mertzlufft-Paufler, Cornelius
(86) Internationale Anmeldenummer: PCT/EP2019/055611
(87) Internationale Veröffentlichungsnummer: WO 2019/206503

(56) Entgegenhaltungen:
- EP-A2- 0 350 721
- WO-A1-2009/062997
- WO-A1-2012/036627
- DE-A1- 2 729 458
- US-A- 4 884 750

## Beschreibung

Die Erfindung betrifft einen Durchflussmengenregler zum Einstellen einer Durchflussmenge eines Fluids, insbesondere eines flüssigen oder gasförmigen Mediums, wobei der Durchflussmengenregler einen Regelkörper und eine Regelöffnung aufweist, die zumindest teilweise durch ein Gehäuse ausgebildet ist, wobei ein lichtes Öffnungsmaß der Regelöffnung durch den Regelkörper in Abhängigkeit eines den Regelkörper beaufschlagenden Drucks veränderbar ist. Vorzugsweise ist der Durchflussmengenregler zum Einsetzen in einen Auslauf einer sanitären Auslaufarmatur, einer Heiztherme und/oder eines Haushaltsgeräts, beispielsweise eine Kaffeemaschine, eingerichtet.

Die Erfindung betrifft also weiter die Verwendung eines Durchflussmengenreglers der zuvor genannten Art in einer sanitären Auslaufarmatur, einer Heiztherme und/oder einem Haushaltsgeräts zur Einstellung eines bestimmten Volumenstroms pro Zeiteinheit, insbesondere eines nahezu konstanten Volumenstroms innerhalb eines Arbeitsbereichs.

Die Erfindung betrifft schließlich eine sanitäre Auslaufarmatur, eine Heiztherme und/oder ein Haushaltsgerät mit einem Durchflussmengenregler zur Einstellung eines bestimmten Volumenstroms pro Zeiteinheit eines flüssigen Mediums.

Durchflussmengenregler der eingangs genannten Art dienen in der Regel dazu, möglichst unabhängig von einem Druck innerhalb einer Leitung eine Durchflussmenge eines Fluids, insbesondere einer Flüssigkeit, wie insbesondere Wasser, oder eines Gases, pro Zeiteinheit bereitzustellen. Im Gegensatz zu sogenannten Drosseln, die üblicherweise eine reine, unveränderliche Verengung eines Leitungsquerschnitts darstellen und somit einen örtlicher Strömungswiderstand erzeugen, weisen Durchflussmengenregler einen Regelkörper auf, der in Abhängigkeit des Drucks seinen Strömungswiderstand verändern kann, um zu einem druckunabhängigen Volumenstrom zu gelangen.

Vorbekannte Durchflussmengenregler weisen jedoch den Nachteil auf, dass eine damit realisierbare Regelung einer Durchflussmenge nicht ausreichend genau ist, beispielsweise um Schwankungen des Volumenstroms bei variierenden Drücken zu vermeiden oder um einen bestimmten Volumenstrom pro Zeiteinheit über einen breiteren Druckbereich nahezu konstant einstellen zu können.

Beispielsweise ist aus WO 2012/036627 A1 ein mikrofluidischer Durchflussmengenregler auf Basis einer beweglichen und deformierbaren Membran als Regelkörper bekannt mit dem sich ein Durchfluss gezielt einstellen lässt, wobei der Durchfluss beziehungsweise der anliegende Fluiddruck zu einer Aktuierung der Membran führt, wodurch die Membran ein lichtes Maß einer Regelöffnung verändert. Die Membran weist symmetrisch ausgestaltete Segmente auf, die durch Beaufschlagung mit einem Druck reversibel verformbar sind. Mit dieser Vorrichtung können unterschiedlich große Drücke aber nicht unterschiedlich geregelt werden, das heißt das Regelverhalten ist gerade unveränderlich in Bezug auf einen anliegenden Fluiddruck.

Ausgehend von diesem technischen Hintergrund besteht daher die Aufgabe, einen Durchflussmengenregler der eingangs genannten Art zu schaffen, durch welchen eine verbesserte Regelung eines Volumenstroms eines Fluids, insbesondere eines flüssigen und/oder gasförmigen Mediums, möglich ist.

Die Lösung dieser Aufgabe wird erfindungsgemäß durch die Merkmale des unabhängigen Anspruchs 1 bereitgestellt. Insbesondere wird erfindungsgemäß zur Lösung der Aufgabe vorgeschlagen, dass der Regelkörper wenigstens zwei voneinander entkoppelte, jeweils druckabhängig verformbare Segmente aufweist, und dass der Regelkörper einen Teilbereich des die Regelöffnung begrenzenden Randes ausbildet. Somit ist eine druckabhängige Verformung der Segmente zur druckunabhängigen Einstellung eines Volumenstroms pro Zeiteinheit zumindest innerhalb eines Arbeitsbereichs möglich. Der Begriff "entkoppelt" kann sich darauf beziehen, dass die Segmente unabhängig voneinander verformbar und/oder bewegbar sind. Der Begriff "Regelöffnung" kann sich auf eine Öffnung im Strömungsweg des Durchflussmengenreglers beziehen, deren Randbereich durch ein Bauteil oder unterschiedliche Bauteile des Durchflussmengenreglers ausbildbar ist. Vorzugsweise wird der Randbereich der Regelöffnung durch das Gehäuse und den Regelkörper gebildet. Insbesondere kann das lichte Öffnungsmaß der Regelöffnung eine pro Zeiteinheit fließende Menge an Fluid festlegen.

Nachfolgend werden optionale, vorteilhafte Ausgestaltungen der Erfindung beschrieben. Die Merkmale dieser Ausgestaltungen können jeweils allein oder in Kombination mit den Merkmalen anderer Ausgestaltungen mit den zuvor genannten Merkmalen kombiniert werden.

Um eine besonders gute Entkopplung der Segmente erreichen zu können, können die wenigstens zwei Segmente durch einen zwischen ihnen ausgebildeten Einschnitt entkoppelt sein. Durch einen solchen Einschnitt können die Segmente im Bereich des Einschnitts voneinander getrennt sein. Insbesondere bei scheibenförmigen Regelkörpern kann der Einschnitt von einer Außenkante ins Innere des Regelkörpers verlaufen.

Bevorzugt ist der Regelkörper scheibenförmig ausgebildet. Somit ist eine Entkopplung von Segmenten durch Einschnitte besonders einfach ausführbar.

Um eine besonders genaue Regelung einer Durchflussmenge pro Zeiteinheit erreichen zu können, können die Segmente stufenlos verformbar sein. Eine solche stufenlose Verformung kann dabei in Abhängigkeit eines auf die Segmente wirkenden Drucks erfolgen. Insbesondere können sich die Segmente bei einem sich verändernden Druck kontinuierlich verformen und/oder kontinuierlich bewegen. Es ist somit erreichbar, dass die Segmente druckabhängig auch Zwischenpositionen zwischen einer maximal geöffneten und einer sehr kleinen Regelöffnung stabil - beispielsweise als Gleichgewichtszustand - einnehmen können. Dies kann den Vorteil haben, dass eine pro Zeiteinheit durchströmende Durchflussmenge an Fluid zumindest in einem Arbeitsbereich druckunabhängig auf einen konstanten oder zumindest nahezu konstanten Wert begrenzbar ist.

Das lichte Öffnungsmaß der Regelöffnung kann durch eine Wechselwirkung zwischen dem Regelkörper und dem Gehäuse definiert werden. Als Regelöffnung kann eine engste Stelle eines durch den Durchflussmengenregler führenden Strömungskanals angesehen werden. Insbesondere kann sich der Begriff Rand der Regelöffnung auf eine eindimensionale Struktur beziehen. Insbesondere kann sich der Begriff der Regelöffnung auf eine zweidimensionale Struktur beziehen.

Die Regelöffnung kann eine unrunde und/oder asymmetrische Form aufweisen, welche beispielsweise aufgrund einer druckabhängigen Wechselwirkung zwischen dem Gehäuse und dem Regelkörper definiert ist.

Es kann somit sein, dass die Regelöffnung nicht nur durch ein Bauteil des Durchflussmengenreglers, sondern zumindest durch Gehäuse und Regelkörper ausgebildet ist. Es kann weiter vorgesehen sein, dass aufgrund der Wechselwirkung zwischen Gehäuse und Regelkörper - insbesondere druckabhängig - mehrere, voneinander getrennte Regelöffnungen ausgebildet sind.

Bei einer Ausgestaltung des Durchflussmengenreglers kann in einem Aufnahmeraum ein Befestigungsmittel ausgebildet sein, an welchem der Regelkörper im Gehäuse gelagert und/oder gehalten ist. Vorzugsweise ist der Regelkörper mittels des Befestigungsmittels derart gelagert, dass der Regelkörper zumindest parallel zu einer Längsachse des Durchflussmengenreglers deformierbar gelagert ist. Alternativ oder zusätzlich kann vorgesehen sein, dass der Regelkörper mittels des Befestigungsmittels derart gelagert ist, dass der Regelkörper zumindest parallel einer Strömungsrichtung eines durch den Durchflussmengenregler in Gebrauch hindurchströmenden Fluids deformierbar am Gehäuse gelagert ist. Durch das Befestigungsmittel ist es daher zumindest teilweise möglich, zumindest einen Freiheitsgrad zur Bewegung und/oder Verformung des Regelkörpers zu definieren. Diese Ausgestaltung ist besonders geeignet für scheibenförmige Regelkörper.

Bei einer weiteren Ausgestaltung kann der Regelkörper einen Verbindungsteil aufweisen, mit welchem die einzelnen Segmente verbunden sind. Alternativ oder zusätzlich kann der Regelkörper einen, beispielsweise den bereits erwähnten, Verbindungsteil aufweisen, über welchen Verbindungsteil der Regelkörper im Gehäuse gelagert ist. Vorzugsweise kann der Verbindungsteil eine, insbesondere durchgehende, Lagerungsöffnung aufweisen, in welche ein oder das Befestigungsmittel eingeführt ist. Weiter bevorzugt kann das Befestigungsmittel als von einem Aufnahmeraumboden abstehender Zapfen ausgebildet sein. Somit ist eine noch bessere Entkopplung der Segmente voneinander möglich.

Um einzelne Segmente bei einem bestimmten Druck unterschiedlich verformen zu können, insbesondere um unterschiedliche Strömungswiderstände durch die Segmente ausbilden zu können, können die wenigstens zwei Segmente unterschiedliche Widerstände gegen eine druckabhängige Verformung, also Verformungswiderstände, aufweisen. Dies kann insbesondere derart erfolgen, dass die wenigstens zwei Segmente zur Einstellung einer Durchflussmenge in unterschiedlichen Druckbereichen eingerichtet sind. Beispielsweise können sich die wenigstens zwei Segmente in ihrer Materialstärke und/oder in ihrer Steifigkeit und/oder in ihrer Form und/oder in ihrer Größe einer Beaufschlagungsfläche und/oder in ihrem Material unterscheiden.

Im Gegensatz zu Anordnungen bei denen ein Regelkörper eine Durchflussöffnung entweder komplett verschließt oder komplett freigibt, kann es vorgesehen sein, dass der Durchflussmengenregler, wie er hierin beschrieben und beansprucht ist, dazu eingerichtet ist, ein lichtes Öffnungsmaß der Regelöffnung zu begrenzen und/oder nicht vollständig zu verschließen. Bei einer Ausgestaltung kann daher ein Rand wenigstens einer Ablauföffnung des Gehäuses einen Teilbereich des die Regelöffnung begrenzenden Randes ausbilden. Beispielsweise kann dabei die Ablauföffnung in Strömungsrichtung nachgelagert zu dem Regelkörper angeordnet sein.

Bei einer Ausgestaltung des Durchflussmengenreglers kann eine oder die bereits zuvor genannte Ablauföffnung des Gehäuses, welche vorzugsweise dem Regelkörper in Strömungsrichtung nachgelagert ist, als ein vorzugsweise ringförmiger Spalt oder als mehrere unterbrochene Spaltabschnitte, welche zusammen vorzugsweise ringförmig angeordnet sind, ausgebildet sein. Insbesondere kann/können der Spalt oder die Spaltabschnitte als in einer Umlaufrichtung umlaufender und/oder ringförmiger Spalt oder Spaltabschnitt ausgebildet sein. Dabei kann der Spalt oder die Spaltabschnitte um ein oder das bereits zuvor genannte Befestigungsmittel herum verlaufen. Der Spalt oder die Spaltabschnitte kann/können beispielsweise um das im Gehäuse zentriert ausgebildete Befestigungsmittel herum verlaufen.

Bei einer Ausgestaltung der Erfindung kann vorgesehen sein, dass zwischen den zwei Segmenten eine Trennwand angeordnet ist.

Von Vorteil ist dabei, dass eine Entkopplung der Segmente besonders einfach ausführbar ist. Eine Trennwand kann zusätzlich verhindern, dass eine Querströmung auftritt, mit welcher das Regelverhalten eines Segments durch das Regelverhalten des benachbarten Segments mitbestimmt wird.

Bevorzugt trennt die Trennwand eine, beispielsweise die bereits erwähnte, Ablauföffnung des Gehäuses in zu der Unterteilung des Regelkörpers entsprechender Weise. Somit ist die Ablauföffnung korrespondierend zu dem Regelkörper unterteilbar. Eine Strömung von einem Segment in einen Teil der Ablauföffnung, der nicht dem Segment zugeordnet ist, kann somit verhindert werden. Besonders günstig ist es, wenn die Trennwand in den Regelkörper eingreift, beispielsweise in den Einschnitt oder sogar diesen übergreift, beispielsweise in Einschnitt, und/oder wenn die Trennwand zuströmseitig an dem Regelkörper übersteht. Es ist somit ein seitlich abgeschlossener Aufnahmeraum bildbar.

Um eine Trennung der Bereiche des Aufnahmeraums, in denen die einzelnen Segmente angeordnet sind, erreichen zu können, kann der Durchflussmengenregler wenigstens zwei Trennwände, umfassen, die einen oder den bereits zuvor genannten in Strömungsrichtung vor einer oder der bereits zuvor genannten Ablauföffnung des Gehäuses angeordneten Aufnahmeraum, in welchem der Regelkörper innerhalb des Gehäuses angeordnet ist, in wenigstens zwei voneinander getrennte Segmentkammern, in welchen Segmentkammern jeweils zumindest ein Segment angeordnet ist, unterteilen. Alternativ oder ergänzend kann es vorgesehen sein, dass die Trennwände eine oder die Ablauföffnung des Gehäuses in wenigstens zwei voneinander getrennte Ablauföffnungsabschnitte unterteilen. Durch die Trennwände können die Segmentkammern und/oder die einzelnen Segmente und/oder die Ablauföffnungsabschnitte voneinander abgeschirmt werden, so dass sich beispielsweise keine Einflüsse einer abgelenkten Strömung in einer Segmentkammer auf eine benachbarte Segmentkammer störend auswirken. Die Trennwände können hierbei, parallel zu der Strömungsrichtung angeordnet sein. Somit ist die Strömung besonders gut von dem Segment in die (gegebenenfalls unterstellte) Ablauföffnung leitbar. Die Trennwände können jedoch auch schräg in der Stiftungsvorrichtung ausgerichtet sein.

Die Ausbildung von wenigstens zwei Trennwänden ermöglicht es, wenigstens ein Segment beidseitig durch Trennwände einzufassen. Es ist somit ein dem wenigstens einen Segment zugeordneter Aufnahmeraum schaffbar. Bevorzugt sind alle Trennwände jeweils in einem zugeordneten Einschnitt im Regelkörper vorzugsweise jeweils zwischen benachbarten Segmenten angeordnet.

Um ein Minimum des lichten Öffnungsmaßes der Regelöffnung und/oder einen stärkeren Widerstand des Regelkörpers gegen die weitere Verformung definieren zu können, kann in zumindest einer Segmentkammer wenigstens ein Abstandhalter angeordnet sein, der durch das wenigstens eine in dieser Segmentkammer angeordnete Segment druckabhängig beaufschlagbar ist. Der Abstandhalter kann somit bei höheren Drücken, bei denen der Regelkörper an ihm anliegt, das jeweilige Segment unterteilen, so dass ein höherer Widerstand gegen eine weitere Verformung besteht. Somit ist ein Niederdruckverhalten und ein Hochdruckverhalten des Segments definierbar. Vorzugsweise kann der wenigstens eine Abstandhalter in radialer Richtung zu einer oder der Ablauföffnung oder einem oder dem Ablauföffnungsabschnitt versetzt angeordnet sein. Insbesondere kann der Abstandhalter derart eingerichtet sein, dass in Gebrauchsstellung mittels des Abstandhalters ein Abstand zwischen dem den Abstandhalter beaufschlagenden Segment und einer Aufprallfläche der Segmentkammer definiert ist.

Um ein Minimum des lichten Öffnungsmaß der Regelöffnung definieren zu können, kann alternativ oder ergänzend in zumindest einer Segmentkammer wenigstens ein Anlagekörper angeordnet sein, welcher eine relativ zu einer, beispielsweis der bereits zuvor genannten, Längsachse und/oder zu einer, beispielsweise der bereits zuvor genannten, Radialrichtung schräg ausgerichtete Anlagefläche aufweist, die durch ein in der Segmentkammer angeordnetes Segment beaufschlagbar ist. Insbesondere ist der Durchflussmengenregler derart eingerichtet, dass eine Beaufschlagung der Anlagefläche durch das Segment erfolgt, wenn das Segment druckabhängig verformt ist, vorzugsweise wobei bei einer Beaufschlagung der Anlagefläche durch ein Segment, im Bereich der Beaufschlagung eine Abdichtung zwischen Segment und Anlagekörper erzeugbar ist oder erzeugt wird.

Bei einer Ausgestaltung des Durchflussmengenreglers kann ein, beispielsweise der bereits zuvor genannte, Ablauföffnungsabschnitt wenigstens einer Segmentkammer durch einen, beispielsweise den bereits erwähnten, Anlagekörper in zwei voneinander getrennte Teilöffnungen unterteilt sein. Somit kann der Ablauf des Fluids noch besser geregelt werden, indem eine Zerteilung eines Strahls in Einzelstrahlen erfolgt, die vereinzelt an einer Auslaufseite aus dem Durchflussmengenregler austreten.

Um eine besonders genaue Regelung eines Volumenstroms pro Zeiteinheit erreichen zu können, kann der Regelkörper wenigstens vier voneinander entkoppelte, jeweils druckabhängig verformbare Segmente aufweisen. Dabei kann es besonders zweckmäßig sein, wenn zwei sich gegenüberliegende Segmente als Segmentpaare jeweils gleich ausgebildet sind und/oder dass die Segmentpaare des Regelkörpers jeweils zur Einstellung einer Durchflussmenge in unterschiedlichen Druckbereichen eingerichtet sind. Insbesondere können sich die Druckbereiche auf einen Hochdruckbereich und einen Niederdruckbereich beziehen, die vorzugsweise innerhalb eines Arbeitsbereichs liegen.

Um eine Fließgeschwindigkeit des Fluids innerhalb des Durchflussmengenreglers besser abbremsen zu können, können die Segmentkammern jeweils eine schräg und/oder senkrecht zur Längsachse des Durchflussmengenreglers angeordnete Aufprallfläche aufweisen. Die Aufprallflächen der wenigstens zwei Segmentkammern können dabei zueinander in Längsrichtung versetzt und/oder gestuft angeordnet sein. Somit lassen sich unterschiedliche Regeleigenschaften der Segmentkammern umsetzen.

Um zumindest wenigstens einen Freiheitsgrad des Regelkörpers definieren zu können, kann es vorgesehen sein, dass der Durchflussmengenregler mehrere Haltelemente umfasst, durch welche jeweils eine Nut ausgebildet ist, in die der Regelkörper eingesetzt ist. Die Halteelemente können in einem Einschnitt des Regelkörpers zwischen zwei Segmenten angeordnet sein. Die Halteelemente können alternativ oder ergänzend auf einen oder den bereits zuvor genannten Aufnahmeraumboden und/oder auf die Trennwände aufgesetzt oder jeweils als eine Trennwand, beispielsweise die bereits erwähnte Trennwand, ausgebildet sein. Die Nut kann in einer entgegen der Strömungsrichtung verlaufenden Richtung offen ausgestaltet sein. Somit kann der Regelkörper besonders einfach eingesetzt werden und es kann verhindert werden, dass er bei einer Druckbeaufschlagung in eine ungewollte Richtung verdrängt und/oder verformt wird. Beispielsweise können die Halteelemente an oder durch die Trennwände ausgeformt sein.

Besonders günstig ist es, wenn die wenigstens zwei Segmente einstückig verbunden sind. Somit ist ein einstückiger Regelkörper, der beispielsweise aus einem homogenen Material herstellbar, insbesondere stanzbar sein kann, verwendbar. Dabei kann es besonders zweckmäßig sein, wenn der Regelkörper monolithisch ausgebildet ist.

Gemäß einer weiteren vorteilhaften Ausgestaltung kann ein mehrteiliger Regelkörper vorgesehen sein, wobei die Segmente des Regelkörpers durch ein Oberteil und ein Unterteil ausgebildet sind. Somit können auf einfache Weise unterschiedliche Verformungswiderstände der Segmente erreicht werden.

Gemäß einer weiteren, besonders kostengünstigen Ausführungsform kann der Regelkörper ein Oberteil, beispielsweise das bereits zuvor genannte Oberteil, und ein Unterteil, beispielsweise das bereits zuvor genannte Unterteil, aufweisen, wobei das Oberteil und das Unterteil baugleich sind. Dies hat den Vorteil, dass nur ein Herstellungswerkzeug zur Herstellung des Regelkörpers erforderlich ist, wobei sich durch die baugleichen, gleichgeformten Teile dennoch unterschiedliche Verformungswiderstände der Segmente erreichen lassen.

Um eine ungewollte Leckage durch einen Austritt von Fluid an einer dafür nicht vorgesehenen Stelle besser vermeiden zu können, kann das Gehäuse eine umlaufende Wandung aufweisen, die einen, beispielsweise den bereits erwähnten, Aufnahmeraum und/oder die Segmentkammern in radialer Richtung nach außen begrenzt.

Zur Erreichung eines möglichst kleinen Außendurchmessers kann ein Durchflussmengenregler alternativ auch wandungsfrei ausgebildet sein, wobei ein aufnehmendes Rohr die Funktion der Wandung übernehmen kann.

Zur genaueren Einstellung eines lichten Öffnungsmaßes der Regelöffnung des Durchflussmengenreglers und/oder zur genaueren Einstellung eines bestimmten Volumenstroms pro Zeiteinheit innerhalb eines Arbeitsbereichs kann/können auf einem oder dem bereits zuvor genannten Aufnahmeraumboden und/oder auf einer Abstandhalteroberseite und/oder auf einer Anlagekörperoberseite ein Platzhalterelement ausgebildet oder aufgesetzt sein. Insbesondere kann das Platzhalterelement derart ausgestaltet sein, dass ein flächiges und/oder vollständiges Anliegen des Regelkörpers am Aufnahmeraumboden und/oder an der Abstandhalteroberseite und/oder an der Anlagekörperoberseite verhinderbar ist. Beispielsweise kann das Platzhalterelement als wenigstens ein Zäpfchen und/oder als wenigstens ein Grat ausgebildet sein. Ein derartiges Platzhalterelement kann auch dazu eingerichtet und angeordnet sein, einen definierten Auflage- und/oder Biegepunkt für den Regelkörper zu schaffen. Somit kann ein gewünschtes Verformungsverhalten, insbesondere im Niederdruckbereich, erreichbar sein.

Um ein stufenloses Verformen des Regelkörpers besser erreichen zu können, kann der Regelkörper aus einem elastischen und/oder komprimierbaren Material hergestellt sein. Besonders vorteilhaft kann es dabei sein, wenn der Regelkörper aus einem kontinuierlich, druckabhängig verformbaren Material, wie beispielsweise einem Elastomer hergestellt ist.

Zur verbesserten Regelung eines Volumenstroms in unterschiedlichen Druckbereichen, kann es vorteilhaft sein, wenn die wenigstens zwei Segmente oder die Segmentpaare unterschiedlich ausgestaltet sind. Dabei kann beispielsweise vorgesehen sein, dass wenigstens ein Segment eine Stufung aufweist, insbesondere derart, dass das Segment an einer Zulaufseite eine gestufte Beaufschlagungsfläche aufweist. Dadurch kann somit eine Materialschwächung ausgebildet sein. Von Vorteil ist dabei, dass sich das gestufte Segment bei einem niedrigeren Druck weiter verformbar sein kann, als ein Segment ohne Stufung, welches somit eine größere und/oder einheitliche Materialstärke aufweisen kann.

Alternativ oder ergänzend kann es vorgesehen sein, eine Materialschwächung dadurch zu verwirklichen, dass wenigstens ein Segment eine Materialausnehmung aufweist. Vorzugsweise kann ein Segmentpaar aus zwei, sich gegenüberliegenden Segmenten in jedem Segment jeweils zumindest eine Ausnehmung aufweisen. Um verhindern zu können, dass sich in der Ausnehmung Fluid sammelt, kann die Ausnehmung an einer einer Auslaufseite des Durchflussmengenreglers zugewandten Unterseite ausgebildet sein.

Eine besonders robuste und einfach herzustellende Ausgestaltung des Durchflussmengenreglers kann vorsehen, dass das Gehäuse einstückig und/oder monolithisch ausgebildet ist. Dies hat den Vorteil, dass der Durchflussmengenregler aus relativ wenigen Teilen herstellbar ist. Insbesondere können die Trennwände und/oder die Befestigungsmittel und/oder die Abstandhalter und/oder die Anlagekörper und/oder die Halteelemente durch das Gehäuse ausgebildet sein. Vorzugsweise kann das Gehäuse durch Spritzgusstechnik hergestellt sein, womit eine besonders kostengünstige Herstellung möglich ist. Somit lässt sich ein zweiteiliger Durchflussmengenregler aus Gehäuse und Regelkörper verwirklichen.

Der Durchflussmengenregler kann derart ausgestaltet sein, dass der Regelkörper in einem Strömungsweg zwischen einem Zulauf und einem Ablauf des Durchflussmengenreglers angeordnet ist.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine erste bespielhafte Ausgestaltung eines Durchflussmengenreglers zum Einstellen einer Durchflussmenge, mit einem vier voneinander entkoppelte Segmente aufweisenden Regelkörper, wobei zwei sich gegenüberliegende, gleichartig ausgestaltete Segmente je ein Segmentpaar bilden, dargestellt in einer vereinfachten schematischen Draufsicht;
- Fig. 1a: eine Darstellung des in Fig. 1, mittels der mit dem Buchstaben A markierten Linie angezeigten Längsschnitts des Durchflussmengenreglers aus Fig.1, wobei der Längsschnitt durch zwei sich gegenüberliegende Abstandhalter verläuft;
- Fig. 1b: eine Darstellung des in Fig. 1, mittels der mit dem Buchstaben B markierten Linie angezeigten Längsschnitts des Durchflussmengenreglers aus Fig.1, wobei der Längsschnitt durch zwei sich gegenüberliegende Trennwände verläuft;
- Fig. 1c: eine Darstellung des in Fig.1, mittels der mit dem Buchstaben C markierten Linie angezeigten Längsschnitts des Durchflussmengenreglers aus Fig.1, wobei der Längsschnitt durch zwei sich gegenüberliegende Abstandhalter verläuft;
- Fig. 2: eine perspektivische Darstellung der in den Fig. 1 und 1a-c gezeigten Ausgestaltungsform eines Durchflussmengenreglers;
- Fig. 3: eine perspektivische, vereinfachte Explosionszeichnung der in den Fig. 1, 1a-c und 2 gezeigten Ausgestaltungsform eines Durchflussmengenreglers, wobei ein Segmentpaar gestufte Segmente aufweist, die an ihrer Oberseite eine Materialausnehmung aufweisen;
- Fig. 4: eine perspektivische Darstellung des Regelkörpers des Durchflussmengenreglers aus den vorstehenden Figuren, mit zwei aus jeweils gleich ausgeformten Segmenten bestehenden Segmentpaaren, wobei die Segmente eines Segmentpaares der beiden Segmentpaare eine Materialausnehmung aufweisen;
- Fig. 5: eine Draufsicht auf den Regelkörper des Durchflussmengenreglers aus den vorstehenden Figuren;
- Fig. 5a: eine Schnittansicht des Regelkörpers aus Fig. 5, wobei der Regelkörper entlang der in Fig. 5 mit dem Buchstaben A markierten Linie geschnitten ist;
- Fig. 5b: eine Schnittansicht des Regelkörpers aus Fig. 5, wobei der Regelkörper entlang der in Fig. 5 mit dem Buchstaben B markierten Linie geschnitten ist;
- Fig. 6: eine zweite bespielhafte Ausgestaltung eines Durchflussmengenreglers zum Einstellen einer Durchflussmenge, mit einem vier voneinander entkoppelte Segmente aufweisenden Regelkörper, wobei zwei sich gegenüberliegende, gleichartig ausgestaltete Segmente je ein Segmentpaar bilden, dargestellt in einer vereinfachten schematischen Draufsicht;
- Fig. 6a: eine Darstellung des in Fig. 6, mittels der mit dem Buchstaben A markierten Linie angezeigten Längsschnitts des Durchflussmengenreglers aus Fig.6, wobei der Längsschnitt durch zwei sich gegenüberliegende Abstandhalter verläuft;
- Fig. 6b: eine Darstellung des in Fig. 6, mittels der mit dem Buchstaben B markierten Linie angezeigten Längsschnitts des Durchflussmengenreglers aus Fig.6, wobei der Längsschnitt durch zwei sich gegenüberliegende Trennwände verläuft;
- Fig. 6c: eine Darstellung des in Fig. 6, mittels der mit dem Buchstaben C markierten Linie angezeigten Längsschnitts des Durchflussmengenreglers aus Fig.6, wobei der Längsschnitt durch zwei sich gegenüberliegende Abstandhalter verläuft;
- Fig. 7: eine perspektivische Darstellung der in den Fig. 6 und 6a-c gezeigten Ausgestaltungsform eines Durchflussmengenreglers;
- Fig. 8: eine perspektivische, vereinfachte Explosionszeichnung der in den Fig. 6, 6a-c und 7 gezeigten Ausgestaltungsform eines Durchflussmengenreglers, wobei ein Segmentpaar Segmente aufweist, die an ihrer Unterseite eine Materialausnehmung aufweisen;
- Fig. 9: eine perspektivische Darstellung des Regelkörpers des Durchflussmengenreglers aus den vorstehenden Fig. 6, 6a-c, 7 und 8, mit zwei aus jeweils gleich ausgeformten Segmenten bestehenden Segmentpaaren, wobei die Segmente eines Segmentpaares der beiden Segmentpaare eine Materialausnehmung aufweisen;
- Fig. 10: eine Draufsicht auf den Regelkörper des Durchflussmengenreglers aus den vorstehenden Fig. 6, 6a-c, 7, 8 und 9;
- Fig. 10a: eine Schnittansicht des Regelkörpers aus Fig. 10, wobei der Regelkörper, entlang der in Fig. 10 mit dem Buchstaben A markierten Linie geschnitten ist;
- Fig. 10b: eine Schnittansicht des Regelkörpers aus Fig. 10, wobei der Regelkörper, entlang der in Fig. 10 mit dem Buchstaben B markierten Linie geschnitten ist,
- Fig. 11: eine weitere mögliche Ausgestaltung eines Regelkörpers, der zumindest zweiteilig ausgebildet ist, wobei die Segmente des Regelkörpers durch ein Oberteil und ein Unterteil gebildet sind,
- Fig. 12: das Oberteil des Regelkörpers aus Fig. 11,
- Fig. 13: das Unterteil des Regelkörpers aus Fig. 11.

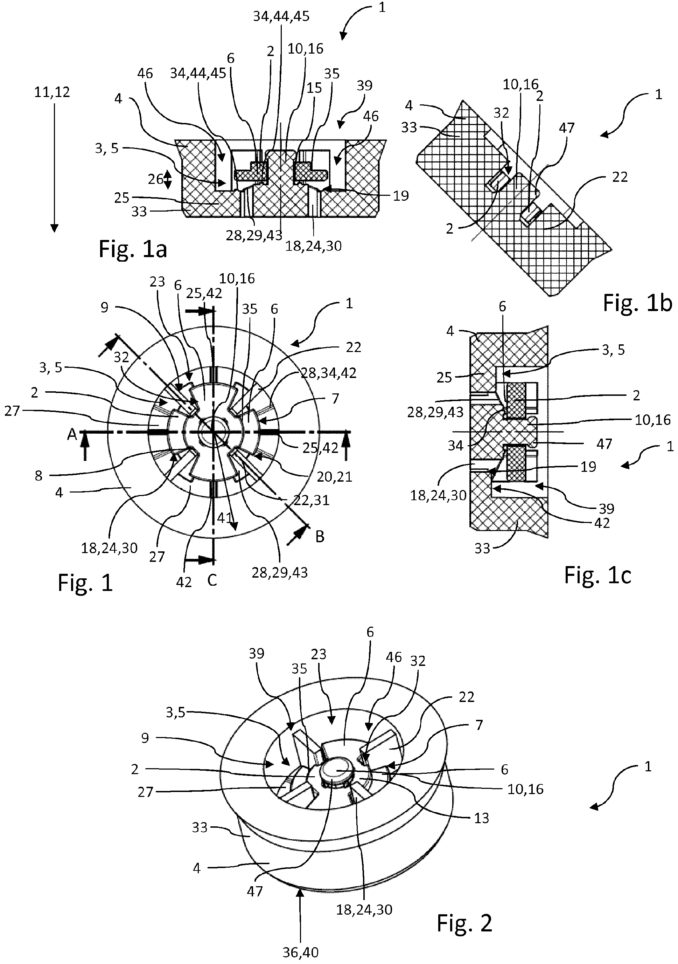

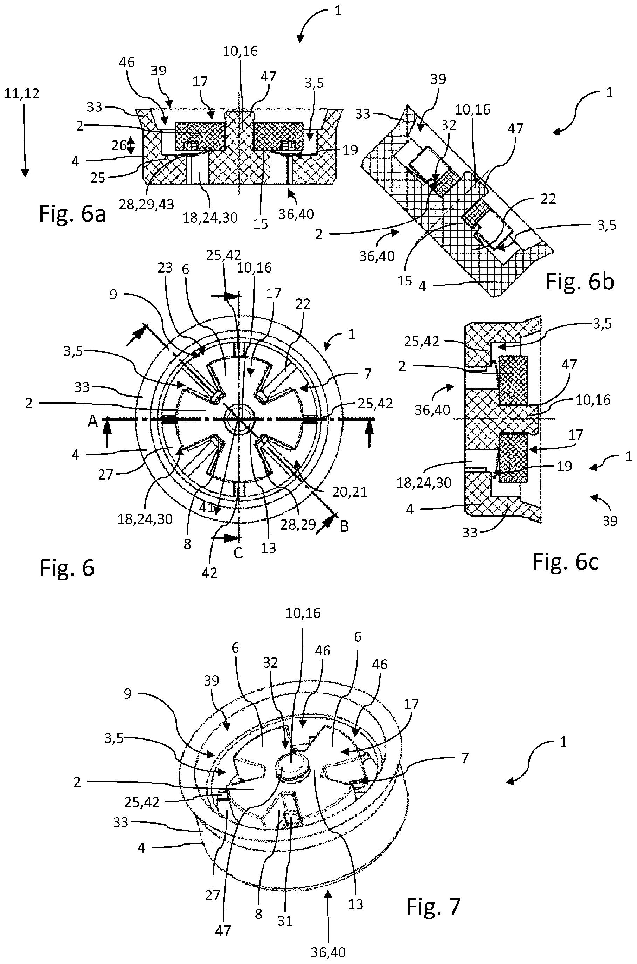

In den Figuren 1 bis 3 ist eine erste und in den Figuren 6 bis 8 eine zweite beispielhafte Ausgestaltungsform eines im Ganzen jeweils mit 1 bezeichneten Durchflussmengenreglers zum Einstellen einer Durchflussmenge eines Fluids, insbesondere eines flüssigen und/oder gasförmigen Mediums, wie beispielsweise Wasser, dargestellt.

Die Durchflussmengenregler 1 weisen jeweils einen Regelkörper 2 auf, der innerhalb eines Gehäuses 4 des Durchflussmengenreglers 1 angeordnet ist. Durch den Regelkörper 2 wird ein lichtes Öffnungsmaß 5 einer Regelöffnung 3 des Durchflussmengenreglers 1 in Abhängigkeit eines durch das Fluid erzeugten, den Regelkörper 2 beaufschlagenden Drucks verändert. Insbesondere kann dabei vorgesehen sein, dass die Regelöffnung 3 nicht vollständig verschlossen wird, vorzugsweise auch dann nicht vollständig verschlossen wird, wenn ein Maximaldruck eines Arbeitsbereichs erreicht wird.

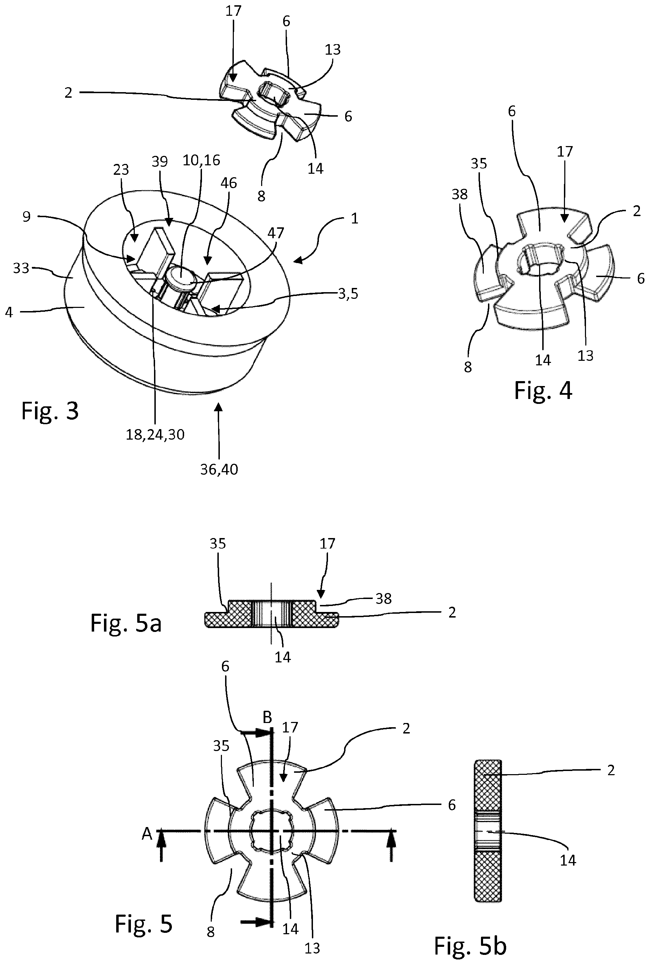

Der Regelkörper 2 der beiden Ausführungsformen des Durchflussmengenreglers 1 ist in den Figuren 4, 5 sowie 9 und 10 ohne das Gehäuse 4 des Durchflussmengenreglers 1 dargestellt.

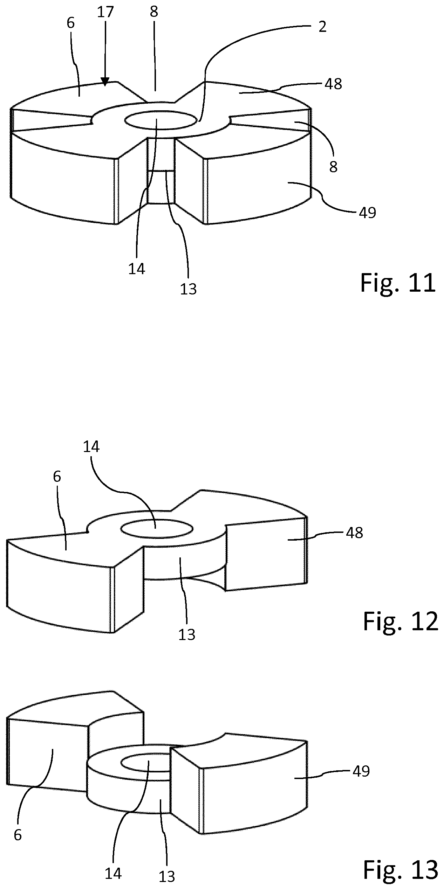

In den Figuren 11 bis 13 ist eine weitere mögliche Ausgestaltung eines Regelkörpers 2 gezeigt, der aus einem Oberteil 48 und einem Unterteil 49 zusammengesetzt ist. Dadurch lassen sich auf einfache Art und Weise unterschiedliche Verformungswiderstände der Segmente 6 erreichen. Vorzugsweise ist das Oberteil 48 und das Unterteil 49 gleich ausgeformt, so dass nur ein Werkzeug zu Herstellung erforderlich ist, was die Kosten erheblich reduziert.

Wie anhand der Beispiele gezeigt ist, kann der Regelkörper 2 scheibenförmig ausgebildet sein.

Die Regelöffnung 3 und/oder ihr lichtes Öffnungsmaß 5 kann/können sich somit auf eine engste Stelle in einem durch das Gehäuse 4 und den Regelkörper 2 ausgebildeten Strömungsweg 46 beziehen. Der Rand 7 der Regelöffnung 3 wird daher durch ein Zusammenwirken des Gehäuses 4 mit dem Regelkörper 3 druckabhängig ausgebildet. Aufgrund der druckabhängigen Veränderung der Regelöffnung 3 kann diese sich auch aus mehreren einzelnen Regelöffnungsteilen zusammensetzen, wobei die Regelöffnungsteile beispielsweise durch ein Anliegen des Regelkörpers 2 an einem Teil des Gehäuses 4 voneinander getrennt sein können. In diesem Fall werden somit auch die Ränder der einzelnen Regelöffnungsteile durch das Gehäuse 4 und den Regelkörper 2 ausgebildet. Die Gesamtheit der Regelöffnungsteile kann dann die Regelöffnung 3 ergeben.

Der Regelkörper 2 weist wenigstens zwei voneinander entkoppelte, jeweils druckabhängig verformbare Segmente 6 auf. Die Segmente 6 bilden zusammen mit dem Gehäuse 4 einen die Regelöffnung 3 begrenzenden Rand 7 aus. Somit kann das lichte Öffnungsmaß 5 der Regelöffnung 3 durch die druckabhängige Verformung und/oder einer Veränderung einer Lage des Regelkörpers 2 innerhalb des Gehäuses 4 in Abhängigkeit des herrschenden Drucks definiert sein.

Um die Segmente 6 des Regelkörpers 2 unabhängig voneinander, jeweils druckabhängig verformen zu können, weist der Regelkörper 2 Einschnitte 8 zwischen zwei benachbarten Segmenten 6 auf. Durch die Einschnitte 8 ist somit eine Entkopplung der einzelnen Segmente 6 erreicht.

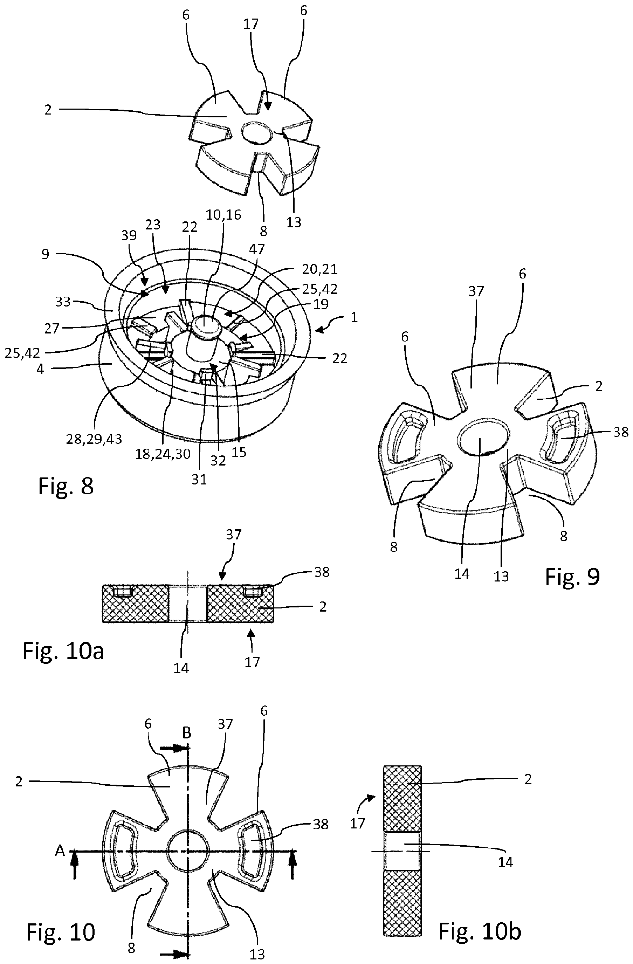

Bei den in den Figuren dargestellten Ausführungsformen weisen die Regelkörper 2 der Durchflussmengenregler 1 jeweils vier Segmente 6 auf. Dabei bilden jeweils zwei sich gegenüberliegende Segmente 6 ein Segmentpaar aus. Die beiden Segmente 6 eines Segmentpaares können vorzugsweise baugleich ausgebildet sein. Alternativ oder ergänzend können die einzelnen Segmente 6 unterschiedlicher Segmentpaare unterschiedlich ausgeformt sein (vgl. hierzu die nachfolgend noch genauer beschriebenen unterschiedlichen Ausgestaltungen der Fig. 4 und 9).

In den Figuren 11 bis 13 ist ein Regelkörper 2 gezeigt, dessen Segmente 6 durch ein Oberteil 48 und ein Unterteil 49 ausgebildet sind. In Montagestellung ist das Oberteil 48 und das Unterteil 49 relativ zueinander so ausgerichtet, dass die Segmente 6 des Oberteils quer oder senkrecht zu den Segmenten 6 des Unterteils 49 ausgerichtet sind.

Das Gehäuse 4 bildet einen Aufnahmeraum 9 aus, in welchem ein Befestigungsmittel 10 angeordnet ist. Mittels des Befestigungsmittels 10, welches hier als ein von einem Aufnahmeraumboden 15, insbesondere senkrecht, abstehender Zapfen 16 ausgebildet ist, ist der Regelkörper 2 im Gehäuse 4 gelagert und/oder gehalten.

Vorzugsweise ist der Regelkörper 2 mittels des Befestigungsmittels 10 innerhalb des Gehäuses 4 relativ zum Gehäuse 4 beweglich gelagert. Dabei kann es vorgesehen sein, dass der Regelkörper 2 zumindest parallel zu einer Längsachse 11 des Durchflussmengenreglers 1 und/oder einer Strömungsrichtung 12 eines durch den Durchflussmengenregler 1 in Gebrauch hindurchströmenden Fluids verstellbar gelagert und/oder verformbar ist. Das Befestigungsmittel 10 kann an seinem freien Ende eine Verdickung 47 aufweisen. Somit kann besser vermieden werden, dass sich der Regelkörper 2 vollständig vom Befestigungsmittel 10 löst.

Der Regelkörper 2 weist einen Verbindungsteil 13 auf, mit welchem die einzelnen Segmente 6 des Regelkörpers 2 verbunden sind. Vorzugsweise ist der Regelkörper 2 einstückig und/oder monolithisch, beispielsweise aus einem elastischen Material, wie Gummi, ausgebildet. Der Regelkörper 2 entwickelt somit gegen die bereits erwähnte druckabhängige Verformung eine druckabhängige Rückstellkraft oder einen druckabhängigen Widerstand. Je nach Druckdifferenz über dem Durchflussmengenregler 1 bildet sich somit ein Gleichgewicht mit einer bestimmten Deformation des Regelkörpers 2 aus, zu der ein bestimmtes Öffnungsmaß 5 gehört. Dieses wird oberhalb eines Druckschwellenwertes, der einen Arbeitsbereich kennzeichnet, bei steigendem Druck jeweils um so viel kleiner, dass trotz des Druckanstiegs eine gleichbleibende Durchflussmenge pro Zeiteinheit fließt. Der Durchflussmengenregler 1 regelt somit im Arbeitsbereich druckabhängig eine konstante Durchflussmenge pro Zeiteinheit ein. Gemäß der vorliegenden Erfindung sind mehrere entkoppelte Segmente 6 vorgesehen. Diese können jeweils eine eigene Regelkurve haben. Das Gesamt-Regelverhalten des Durchflussmengenreglers ergibt sich aus der Summe dieser Regelkurven.

Der Regelkörper 2 ist über das Verbindungsteil 13, welches eine durchgehende Lagerungsöffnung 14 aufweist, auf das Befestigungsmittel 10 aufgesteckt. Die Verdickung 47 des Befestigungsmittels 10 weist einen breiteren Querschnittsdurchmesser als der Durchmesser der Lagerungsöffnung 14 auf, um ein Abfallen des Regelkörpers 2 vom Befestigungsmittel 10 besser verhindern zu können.

Wenigstens zwei Segmente 6 des Durchflussmengenreglers 1 weisen unterschiedliche Widerstände gegen eine druckabhängige Verformung mittels des Fluids auf. Somit ist es möglich, dass die beiden, unterschiedliche Widerstände aufweisenden Segmente 6 zur Einstellung einer Durchflussmenge in unterschiedlichen Druckbereichen vorgesehen sind. Beispielsweise können die wenigstens zwei, unterschiedliche Widerstände aufweisenden Segmente 6 dazu eingerichtet sein, dass eines der Segmente 6 einen Niedrigdruckbereich und das andere der beiden Segmente 6 einen Hochdruckbereich regelt. Besonders zweckmäßig kann es dabei sein, wenn jeweils ein Segmentpaar 6 zur Regelung eines bestimmten Druckbereichs eingerichtet ist.

Um erreichen zu können, dass wenigstens zwei Segmente 6 unterschiedliche Widerstände gegen eine druckabhängige Verformung aufweisen, können sich die wenigstens zwei Segmente 6 beispielsweise in ihrer Materialstärke und/oder in ihrer Steifigkeit und/oder in ihrer Form und/oder in ihrer Größe einer Beaufschlagungsfläche 17 und/oder in ihrem Material unterscheiden.

Beispiele hierfür sind in den Figuren 4, 5 sowie 9 und 10 gezeigt. Der in den Figuren 5 bis 5b gezeigte Regelkörper 2 weist zwei unterschiedlich ausgebildete Segmentpaare mit jeweils zwei Segmenten 6 auf. Die Segmente 6 können, wie hier dargestellt, beispielsweise flügelförmig und/oder kreissegmentförmig ausgebildet sein. Es kann auch vorgesehen sein, dass sich die Segmente 6 bei einer Rotation um eine Mittelachse des Regelkörpers 2 um einen bestimmten Winkel aufeinander abbilden lassen. Dies kann zum Beispiel dadurch erreicht werden, dass die Segmente 6 in gleichen Abständen zueinander, insbesondere in Umlaufrichtung, angeordnet sind.

Der Regelkörper 2 aus den Figuren 4 und 5 weist an zwei seiner Segmente 6 eine Stufung 35 auf, wodurch eine Materialausnehmung 38, also eine Materialschwächung, am distalen Ende der beiden Segmente 6 ausgebildet ist. Das weitere Segmentpaar weist ausnehmungsfreie Segmente 6 auf.

Eine weitere Möglichkeit zur Ausbildung unterschiedlicher Verformungswiderstände ist in den Figuren 9 und 10 dargestellt. Der Regelkörper 2 weist hierbei an einem Segmentpaar aus zwei Segmenten 6 jeweils an einer Unterseite 37 ausgebildete Materialausnehmungen 38 auf. Die Materialausnehmungen 38 können vorzugsweise in einem distalen Bereich des jeweiligen Segments 6 ausgebildet sein. Der Begriff "distal" kann sich hierbei auf einen von einer Mittelachse des Regelkörpers 2 entfernten Bereich beziehen, wobei "proximal" einen der Mittelachse nähergelegenen Bereich definiert.

Aufgrund der Materialausnehmungen 38 weisen die Segmente 6 mit einer solchen Materialausnehmung 38 einen geringeren Widerstand als Segmente 6 ohne Materialausnehmung auf. Dies führt dazu, dass sie bei kleineren Drücken schließen und somit eine geringe Durchflussmenge pro Zeiteinheit eingeregelt wird.

Wie zudem insbesondere aus Figur 1 zu entnehmen ist, kann ein Regelkörper 2 Segmente 6 mit unterschiedlicher Länge, insbesondere bezogen auf eine von einer Körpermittelachse gemessene Länge, aufweisen. Somit können auch durch diese Ausgestaltung unterschiedliche Widerstände der Segmente 6 erreicht werden.

Alternativ oder ergänzend dazu kann ein unterschiedlicher Widerstand gegen eine druckabhängige Verformung der Segmente 6 auch durch die Verwendung eines Oberteils 48 und eines Unterteils 49 erreicht werden, wie zum Beispiel bei der Variante aus den Figuren 11 bis 13. Die Segmente 6 des Oberteils 48 lassen sich weniger stark und/oder schnell bei einer Druckbeaufschlagung verformen als die Segmente 6 des Unterteils 49. Bei einer Druckbeaufschlagung des Regelkörpers 2 wird somit das Oberteil 48 zumindest teilweise gegen das Unterteil 49 gedrückt, weshalb die Segmente 6 des Oberteils 48 einen größeren Verformungswiderstand aufweisen als die Segmente 6 des Unterteils 49, da sie am Unterteil 49 anliegen. Im Gegensatz dazu wird das Unterteil 49 vom Oberteil 48 weggedrückt. Insbesondere derart, dass sich zwischen Oberteil 48 und Unterteil 49 in einem Bereich, in dem die Segmente 6 des Unterteils am Oberteil 48 insbesondere in Ruhestellung anliegen, ein Spalt zwischen Oberteil 48 und Unterteil 49 bildet.

Das Gehäuse 4 weist zumindest eine Ablauföffnung 18 auf. Die in den Figuren dargestellten Ausgestaltungen weisen mehrere Ablauföffnungen 18 auf. Die Ränder 19 der Ablauföffnungen 18 des Gehäuses 4 bilden einen Teilbereich des die Regelöffnung 3 begrenzenden Randes 7 aus. Die Ablauföffnungen 18 sind dabei in Strömungsrichtung 12 dem Regelkörper 2 und auch der Regelöffnung 3 nachgelagert.

Das lichte Öffnungsmaß 5 der Regelöffnung 3 wird somit durch eine druckabhängige Wechselwirkung des Regelkörpers 2 mit dem Gehäuse 4 definiert.

Die Ablauföffnungen 18 des Gehäuses sind als ein in Umlaufrichtung verlaufender, ringförmiger oder ringabschnittsförmiger Spalt 20 oder als mehrere unterbrochene Spaltabschnitte 21 ausgebildet. Der Spalt 20 oder die Spaltabschnitte 21 sind dabei um das zentriert im Gehäuse 4 angeordnete Befestigungsmittel 10 herum angeordnet.

Das Gehäuse 4 weist mehrere Segmentkammern 23 auf, die voneinander mittels, vorzugsweise parallel zur Strömungsrichtung 12 ausgerichteten, Trennwänden 22 voneinander getrennt sind. Die beiden Durchflussmengenregler 1 der Fig. 1-3 und Fig. 6-8 unterscheiden sich hierbei in der Höhe ihrer Trennwände 22.

Bei der ersten Ausführungsform überragen die Trennwände 22 den im Gehäuse 4 eingesetzten Regelkörper 2 in der Höhe. Bei der zweiten Ausführungsform sind die Trennwände 22 in der Höhe deutlich niedriger ausgebildet, so dass der Regelkörper 2 in eingesetztem Zustand die Trennwände 22 in der Höhe überragt.

Wie anhand der Figuren 2, 3, 7 und 8 gut zu erkennen ist, kann der Aufnahmeraum 9 somit durch die Trennwände 22 in eine beispielsweise der Anzahl der Segmente 6 des Regelkörpers 2 entsprechende Anzahl an Segmentkammern 23 unterteilt sein. Im vorliegenden Fall weisen die Gehäuse 4 der dargestellten Durchflussmengenregler 1 somit jeweils vier Segmentkammern 23 auf. In jeder Segmentkammer 23 ist dabei ein Segment 6, beispielsweise genau ein Segment 6, angeordnet. Mittels der Trennwände 22 können störende Einflüsse aufgrund abgelenkter Strömungen des Fluids zwischen einzelnen Segmentkammern 23 besser vermieden werden.

Die Trennwände 22 können derart verlängert sein, dass sie die Ablauföffnung 18 des Gehäuses 4 in wenigstens zwei, vorzugsweise vier, voneinander getrennte Ablauföffnungsabschnitte 24 unterteilt. Die Ablauföffnungsabschnitte 24 können dabei als voneinander getrennte Kanäle ausgebildet sein. Dabei kann jeder Segmentkammer 23 ein Ablauföffnungsabschnitt 24 zugeordnet sein.

Um eine noch bessere druckabhängige Regelung einer Durchflussmenge erreichen zu können, kann der Durchflussmengenregler 1 in zumindest einer seiner Segmentkammern 23 wenigstens einen Abstandhalter 25 aufweisen, der durch das wenigstens eine in dieser Segmentkammer 23 angeordnete Segment 6 druckabhängig beaufschlagbar ist. Der Abstandhalter 25 kann dabei in radialer Richtung zu der Ablauföffnung 18 oder einem Ablauföffnungsabschnitt 24 versetzt, insbesondere nach außen hin versetzt, angeordnet sein. Durch den Abstandhalter 25 kann ein Abstand 26 zwischen dem den Abstandhalter 25 druckabhängig beaufschlagenden Segment 6 und einer durch das Gehäuse 4 ausgebildeten Aufprallfläche 27 der Segmentkammer 23 definiert sein. Durch den Abstandhalter 25 kann daher ein vollständiges, insbesondere also flächiges Anliegen eines distalen Bereichs eines Segments 6 an der Aufprallfläche 27 verhindert werden. Somit kann das lichte Öffnungsmaß 5 der Regelöffnung 3 auf ein Minimum festgesetzt sein, so dass ein vollständiger Verschluss der Ablauföffnung 18 und/oder der Ablauföffnungsabschnitte 24 und/oder der durch die Wechselwirkung von Regelkörper 2 und Gehäuse 4 gebildeten Regelöffnung 3 verhindert ist.

Um ein Regelungsverhalten des Durchflussmengenreglers 1 noch genauer einstellen zu können, kann der Durchflussmengenregler 1 in zumindest einer seiner Segmentkammern 23 wenigstens einen Anlagekörper 28 aufweisen. Der Anlagekörper 28 kann dabei druckabhängig durch ein Segment 6 des Regelkörpers 2 beaufschlagt werden und/oder sich daran anlegen.

Bei den in den Fig. gezeigten Ausgestaltungen sind in jeder Segmentkammer 23 zwei Anlagekörper 28 angeordnet. Dabei können die Anlagekörper 28 derart angeordnet sein, dass sie jeweils von einem seitlichen Randbereich eines Segments 6 druckabhängig beaufschlagbar sind. Vorzugsweise kann zwischen den sich kontaktierenden Bereichen an der Unterseite 37 des Segments 6 und einer Anlagefläche 29 des Anlagekörpers 28 eine druckabhängige Abdichtung erfolgen.

Weiter kann es vorgesehen sein, dass einzelne Abstandhalter 25, wie beispielsweise aus Figur 6 zu entnehmen ist, unterschiedlich breit ausgestaltet sind. Bei der in Figur 6 dargestellten Ausführungsvariante des Durchflussmengenreglers 1 weist dieser insgesamt vier Abstandhalter 25 auf, wobei sich jeweils zwei Abstandhalter 25 im Aufnahmeraum 9 gegenüberliegen. Dabei können gegenüberliegende Abstandhalter 25 baugleich ausgestaltet sein und/oder benachbarte Abstandhalter unterschiedlich voneinander ausgeformt sein.

Die Anlagekörper 28 können eine relativ zu der Längsachse 11 und/oder zu der Radialrichtung 41 schräg ausgerichtete Anlagefläche 29 aufweisen, die durch das in der jeweiligen Segmentkammer 23 angeordnete Segment 6 beaufschlagbar ist. Durch die schräge Ausgestaltung der Anlagefläche 29 kann auch bei einer Verformung, insbesondere ein Verbiegen in Strömungsrichtung 12, des Segments 6 ein flächiges Anliegen an der Anlagefläche 29 des Anlagekörpers 28 durch eine Unterseite 37 des Segments 6 erreicht werden.

Der Ablauföffnungsabschnitt 24 wenigstens einer Segmentkammer 23 kann durch den Anlagekörper 28 in zwei voneinander getrennte Teilöffnungen 30 unterteilt sein. Bei den in den Figuren dargestellten Ausgestaltung mit jeweils zwei Anlagekörpern 28 pro Segmentkammer 23 unterteilen die Anlagekörper 28 den Ablauföffnungsquerschnitt 24 einer Segmentkammer 23 in insgesamt drei Teilöffnungen 30, wobei eine mittlere Teilöffnung 30 am größten ist und/oder die beiden die mittlere Teilöffnung 30 flankierenden Teilöffnungen 30 kleiner als die mittlere sind und/oder die flankierenden Teilöffnungen 30 gleich groß ausgebildet sind.

Die Segmentkammern 23 weisen jeweils eine schräg oder senkrecht zur Längsachse 11 des Durchflussmengenreglers 1 angeordnete Aufprallfläche 27 auf. Um ein unterschiedliches Regelverhalten der einzelnen Segmente 6 in den Segmentkammern 23 noch besser anpassen zu können, können die Aufprallflächen 27 von wenigstens zwei Segmentkammern 23 relativ zueinander in Längsrichtung versetzt ausgebildet sein. Dadurch lässt sich eine Stufung zwischen den Aufprallflächen 27 der Segmentkammern 23 ausbilden.

Um ein Verrutschen des Regelkörpers 2 auch bei höheren Drücken besser vermeiden zu können, weist der Durchflussmengenregler 1 mehrere Halteelemente 31 auf, die beispielsweise in gleichen Abständen zueinander in Umfangrichtung angeordnet sind. Die Halteelemente 32 können, wie in den Figuren 2 und 7 gezeigt ist, durch eine Trennwand 22 ausgebildet sein und/oder auf eine Trennwand 22 aufgesetzt sein.

Durch die Halteelemente 31 kann somit, vorzugsweise zwischen einer Trennwand 22 und dem Befestigungsmittel 10, eine Nut 32 ausgebildet sein, in die der Regelkörper 2 eingesetzt ist. Die Halteelemente 31 können dabei relativ zum Aufnahmeraumboden 15 senkrecht und/oder entgegen der Strömungsrichtung 12 abstehen. Wie in den Figuren 1, 2, 6 und 7 zu erkennen ist, können die Halteelemente 31 in den Einschnitten 8 des Regelkörpers 2 zwischen zwei Segmenten 6 angeordnet sein. Dadurch ist zum einen eine sehr platzsparende Ausgestaltung des Durchflussmengenreglers 1 und zudem eine stabile Lagerung des Regelkörpers 2 möglich.

Alternativ oder ergänzend kann es vorgesehen sein, dass die Trennwände 22 in den Einschnitten 8 des Regelkörpers 2 jeweils zwischen zwei Segmenten 6 angeordnet sind. Das Gehäuse 4 weist eine umlaufende Wandung 33 auf, die den Aufnahmeraum 9 und somit auch die Segmentkammern 23 in radialer Richtung nach außen hin begrenzt und abschließt. Vorzugsweise bildet die Wandung 33 einen, insbesondere öffnungsfreien, Zylindermantel aus.

Eine weitere Möglichkeit der Einstellung des Regelverhaltens des Durchflussmengenreglers 1 kann dadurch erreicht werden, dass auf dem Aufnahmeraumboden 15 und/oder auf einer Abstandhalteroberseite 42 und/oder auf einer Anlagekörperoberseite 43 ein Platzhalterelement 34 ausgebildet oder aufgesetzt ist. Ein Beispiel dafür ist insbesondere in Figur 1a gezeigt, wobei hier ein Platzhalterelement 34 auf der Abstandhalteroberseite 42 eines Abstandhalters 25 ausgebildet ist. Ein weiteres Platzhalterelement 34 ist am Aufnahmeraumboden 15 ausgebildet. Durch die Platzhalterelemente 34 kann ein flächiges Anliegen des Regelkörpers 2 an der jeweiligen Oberfläche verhindert werden und/oder ein Abstand zwischen der Oberfläche und dem Regelkörper 2 definiert werden, so dass das lichte Öffnungsmaß 5 der Regelöffnung 3 auf ein Minimum begrenzbar ist, also insbesondere kein vollständiges Verschließen der Ablauföffnung 18 und/oder der Ablauföffnungsabschnitte 24 möglich ist. Durch die Platzhalterelemente 34 kann auch die Deformierbarkeit des Regelkörpers 2 beeinflusst werden, um ein bestimmtes Druckverhalten zu erreichen.

Beispielsweise kann ein Platzhalterelement 34 als wenigstens ein Zäpfchen 44 und/oder als wenigstens ein Grat 45 ausgebildet sein.

Eine besonders kostengünstige Herstellung des Durchflussmengenreglers 1 kann dadurch erreicht werden, dass das Gehäuse 4 einstückig und/oder monolithisch ausgebildet ist. Insbesondere können dabei die Trennwände 22 und/oder das Befestigungsmittel 10 und/oder die Abstandhalter 25 und/oder die Anlagekörper 28 und/oder die Halteelemente 31 durch das Gehäuse 4 ausgebildet sein.

Der Regelkörper 2 ist somit in einem Strömungsweg 46 des Durchflussmengenreglers 1 zwischen einem Zulauf 39 und einem Ablauf 40 des Durchflussmengenreglers 1 angeordnet.

Die Erfindung betrifft also einen Durchflussmengenregler 1 zum Begrenzen einer Durchflussmenge eines Fluids, wobei ein zwischen einem Maximum und einem Minium veränderbares lichtes Öffnungsmaß 5 einer Regelöffnung 3 mittels einer Wechselwirkung zwischen einem Regelkörper 2 und einem Gehäuse 4 des Durchflussmengenreglers 1 definierbar ist, wobei das lichte Öffnungsmaß 5 der Regelöffnung 3 durch eine Verformung des Regelkörpers 2 in Abhängigkeit eines den Regelkörper 2 beaufschlagenden Drucks veränderbar ist, wobei der Regelkörper 2 wenigstens zwei voneinander entkoppelte, jeweils druckabhängig verformbare Segmente 6 aufweist, und wobei ein die Regelöffnung 3 begrenzender Rand 7 durch den Regelkörper 2 und das Gehäuse 4 ausgebildet ist. Ein Minimum des lichten Öffnungsmaßes 5 kann in diesem Fall bedeuten, dass kein vollständiges Verschließen der Regelöffnung 3 vorgesehen ist.

### Bezugszeichenliste

- 1: Durchflussmengenregler
- 2: Regelkörper
- 3: Regelöffnung
- 4: Gehäuse
- 5: lichtes Öffnungsmaß
- 6: Segment
- 7: Rand der Regelöffnung
- 8: Einschnitt
- 9: Aufnahmeraum
- 10: Befestigungsmittel
- 11: Längsachse
- 12: Strömungsrichtung
- 13: Verbindungsteil
- 14: Lagerungsöffnung
- 15: Aufnahmeraumboden
- 16: Zapfen
- 17: Beaufschlagungsfläche
- 18: Ablauföffnung
- 19: Rand der Ablauföffnung
- 20: Spalt
- 21: Spaltabschnitt
- 22: Trennwand
- 23: Segmentkammer
- 24: Ablauföffnungsabschnitt
- 25: Abstandhalter
- 26: Abstand
- 27: Aufprallfläche
- 28: Anlagekörper
- 29: Anlagefläche
- 30: Teilöffnung
- 31: Halteelement
- 32: Nut
- 33: Gehäusewandung
- 34: Platzhalterelement
- 35: Stufung
- 36: Auslaufseite
- 37: Unterseite
- 38: Materialausnehmung
- 39: Zulauf
- 40: Ablauf
- 41: Radialrichtung
- 42: Abstandhalteroberseite
- 43: Anlagekörperoberseite
- 44: Zäpfchen
- 45: Grat
- 46: Strömungsweg
- 47: Verdickung
- 48: Oberteil
- 49: Unterteil

## Patentansprüche

1. Durchflussmengenregler (1) zum Einstellen einer Durchflussmenge eines Fluids, insbesondere eines flüssigen oder gasförmigen Mediums, wobei der Durchflussmengenregler (1) einen Regelkörper (2) und eine Regelöffnung (3) aufweist, wobei die Regelöffnung (3) zumindest teilweise durch ein Gehäuse (4) ausgebildet ist, wobei ein lichtes Öffnungsmaß (5) der Regelöffnung (3) durch den Regelkörper (2) in Abhängigkeit eines den Regelkörper (2) beaufschlagenden Drucks veränderbar ist, wobei der Regelkörper (2) zumindest einen Teilbereich eines die Regelöffnung (3) begrenzenden Randes (7) ausbildet, wobei der Regelkörper (2) wenigstens zwei voneinander entkoppelte, jeweils druckabhängig verformbare Segmente (6) aufweist, **dadurch gekennzeichnet dass** die wenigstens zwei Segmente (6) unterschiedliche Widerstände gegen eine druckabhängige Verformung aufweisen.

2. Durchflussmengenregler (1) nach Anspruch 1, **dadurch gekennzeichnet, dass** die wenigstens zwei Segmente (6) durch einen zwischen ihnen ausgebildeten Einschnitt (8) entkoppelt sind und/oder dass der Regelkörper (2) scheibenförmig ausgebildet ist.

3. Durchflussmengenregler (1) nach Anspruch 1 oder 2, **dadurch gekennzeichnet, dass** in einem Aufnahmeraum (9) ein Befestigungsmittel (10) ausgebildet ist, an welchem der Regelkörper (2) im Gehäuse (4) gelagert und/oder gehalten ist, vorzugsweise an welchem der Regelkörper (2) zumindest parallel zu einer Längsachse (11) des Durchflussmengenreglers (1) und/oder einer Strömungsrichtung (12) eines durch den Durchflussmengenregler (1) in Gebrauch hindurchströmenden Fluids deformierbar am Gehäuse (4) gelagert ist, und/oder dass der Regelkörper (2) einen Verbindungsteil (13) aufweist, mit welchem die einzelnen Segmente (6) verbunden sind und/oder über welchen Verbindungsteil (13) der Regelkörper (2) im Gehäuse (4) gelagert ist, vorzugsweise wobei der Verbindungsteil (13) eine, insbesondere durchgehende, Lagerungsöffnung (14) aufweist, in welche ein oder das Befestigungsmittel (10) eingeführt ist, weiter bevorzugt wobei das Befestigungsmittel (10) als von einem Aufnahmeraumboden (15) abstehender Zapfen (16) ausgebildet ist.

4. Durchflussmengenregler (1) nach einem der vorstehenden Ansprüche, **dadurch gekennzeichnet, dass** die wenigstens zwei Segmente (6) zur Einstellung einer Durchflussmenge in unterschiedlichen Druckbereichen eingerichtet sind, vorzugsweise wobei sich die wenigstens zwei Segmente (6) in ihrer Materialstärke und/oder in ihrer Steifigkeit und/oder in ihrer Form und/oder in ihrer Größe einer Beaufschlagungsfläche (17) und/oder in ihrem Material unterscheiden.

5. Durchflussmengenregler (1) nach einem der vorstehenden Ansprüche, **dadurch gekennzeichnet, dass** ein Rand (19) wenigstens einer Ablauföffnung (18) des Gehäuses (4) einen Teilbereich des die Regelöffnung (3) begrenzenden Randes (7) ausbildet, vorzugsweise wobei die Ablauföffnung (18) in Strömungsrichtung (12) nachgelagert zu dem Regelkörper (2) angeordnet ist.

6. Durchflussmengenregler (1) nach einem der vorstehenden Ansprüche, **dadurch gekennzeichnet, dass** eine oder die Ablauföffnung (18) des Gehäuses (4) als ein, insbesondere in einer Umlaufrichtung umlaufender und/oder ringförmiger, Spalt (20) oder als mehrere unterbrochene Spaltabschnitte (21) ausgebildet ist, vorzugsweise wobei der Spalt (20) oder die Spaltabschnitte (21) um ein oder das häuse (4) zentriert ausgebildete Befestigungsmittel (10), herum verläuft/verlaufen.

7. Durchflussmengenregler (1) nach einem der vorstehenden Ansprüche, **dadurch gekennzeichnet, dass** zwischen den zwei Segmenten (6) eine Trennwand (22) angeordnet ist.

8. Durchflussmengenregler (1) nach einem der vorstehenden Ansprüche, **dadurch gekennzeichnet, dass** der Durchflussmengenregler (1) wenigstens zwei, insbesondere parallel oder schräg zur Strömungsrichtung (12) ausgerichtete, Trennwände (22) umfasst, die einen oder den in Strömungsrichtung (12) vor einer oder der Ablauföffnung (18) des Gehäuses (4) angeordneten Aufnahmeraum (9), in welchem der Regelkörper (2) innerhalb des Gehäuses (4) angeordnet ist, in wenigstens zwei voneinander getrennte Segmentkammern (23), in welchen Segmentkammern (23) jeweils zumindest ein Segment (6) angeordnet ist, unterteilen und/oder dass die Trennwände (22) eine oder die Ablauföffnung (18) des Gehäuses (4) in wenigstens zwei voneinander getrennte Ablauföffnungsabschnitte (24) unterteilen und/oder dass die Trennwände (22) mit übereinstimmenden oder unterschiedlichen Höhen ausgebildet sind.

9. Durchflussmengenregler (1) nach einem der vorstehenden Ansprüche, **dadurch gekennzeichnet, dass** in zumindest einer Segmentkammer (23) wenigstens ein, vorzugsweise in radialer Richtung (41) zu einer oder der Ablauföffnung (18) oder einem oder dem Ablauföffnungsabschnitt (24) versetzt angeordneter, Abstandhalter (25) angeordnet ist, der durch das wenigstens eine in dieser Segmentkammer (23) angeordnete Segment (6) druckabhängig beaufschlagbar ist, insbesondere wobei in Gebrauchsstellung mittels des Abstandhalters (25) ein Abstand (26) zwischen dem den Abstandhalter (25) beaufschlagenden Segment (6) und einer Aufprallfläche (27) der Segmentkammer (23) definiert ist.

10. Durchflussmengenregler (1) nach einem der vorstehenden Ansprüche, **dadurch gekennzeichnet, dass** in zumindest einer Segmentkammer (23) wenigstens ein Anlagekörper (28) angeordnet ist, welcher eine relativ zu einer oder der Längsachse (11) und/oder zu einer oder der Radialrichtung (41) schräg ausgerichtete Anlagefläche (29) aufweist, die durch ein in der Segmentkammer (23) angeordnetes Segment (6) beaufschlagbar ist, insbesondere wenn das Segment (6) druckabhängig verformt ist, vorzugsweise wobei bei einer Beaufschlagung der Anlagefläche (29) durch ein Segment (6) im Bereich der Beaufschlagung eine Abdichtung zwischen Segment (6) und Anlagekörper (28) erzeugbar ist oder erzeugt wird.

11. Durchflussmengenregler (1) nach einem der vorstehenden Ansprüche, **dadurch gekennzeichnet, dass** ein oder der Ablauföffnungsabschnitt (24) wenigstens einer Segmentkammer (23) durch einen oder den Anlagekörper (28) in zwei voneinander getrennte Teilöffnungen (30) unterteilt ist.

12. Durchflussmengenregler (1) nach einem der vorstehenden Ansprüche, **dadurch gekennzeichnet, dass** der Regelkörper (2) wenigstens vier voneinander entkoppelte, jeweils druckabhängig verformbare Segmente (6) aufweist.

13. Durchflussmengenregler (1) nach einem der vorstehenden Ansprüche, **dadurch gekennzeichnet, dass** die Segmentkammern (23) jeweils eine schräg und/oder senkrecht zur Längsachse (11) des Durchflussmengenreglers (1) angeordnete Aufprallfläche (27) aufweisen, vorzugsweise wobei die Aufprallflächen (27) der wenigstens zwei Segmentkammern (23) zueinander in Längsrichtung versetzt und/oder gestuft angeordnet sind.

14. Durchflussmengenregler (1) nach einem der vorstehenden Ansprüche, **dadurch gekennzeichnet, dass** der Durchflussmengenregler (1) mehrere Haltelemente (31) umfasst, durch welche jeweils eine, insbesondere in entgegen der Strömungsrichtung (12) offene, Nut (32) ausgebildet ist, in die der Regelkörper (2) eingesetzt ist, und/oder dass die Halteelemente (31) in einem Einschnitt (8) des Regelkörpers (2) zwischen zwei Segmenten (6) angeordnet sind.

15. Durchflussmengenregler (1) nach einem der vorstehenden Ansprüche, **dadurch gekennzeichnet, dass** die wenigstens zwei Segmente (6) einstückig verbunden sind oder dass die wenigstens zwei Segmente (6) separat voneinander ausgebildet sind].

16. Durchflussmengenregler (1) nach einem der vorstehenden Ansprüche, **dadurch gekennzeichnet, dass** das Gehäuse (4) eine umlaufende Wandung (33) aufweist, die einen oder den Aufnahmeraum (9) und/oder die Segmentkammern (23) in radialer Richtung (41) nach außen begrenzt.

17. Durchflussmengenregler (1) nach einem der vorstehenden Ansprüche, **dadurch gekennzeichnet, dass** auf einem oder dem Aufnahmeraumboden (15) und/oder auf einer Abstandhalteroberseite (42) und/oder auf einer Anlagekörperoberseite (43) ein Platzhalterelement (34) ausgebildet oder aufgesetzt ist, vorzugsweise wobei das Platzhalterelement (34) als wenigstens ein Zäpfchen (44) und/oder als wenigstens ein Grat (45) ausgebildet ist.

18. Durchflussmengenregler (1) nach einem der vorstehenden Ansprüche, **dadurch gekennzeichnet, dass** der Regelkörper (2) aus einem elastischen und/oder komprimierbaren Material hergestellt ist.

19. Durchflussmengenregler (1) nach einem der vorstehenden Ansprüche, **dadurch gekennzeichnet, dass** wenigstens ein Segment (6) eine Stufung (35) aufweist, insbesondere derart, dass das Segment (6) eine gestufte Beaufschlagungsfläche (17) aufweist.

20. Durchflussmengenregler (1) nach einem der vorstehenden Ansprüche, **dadurch gekennzeichnet, dass** wenigstens ein Segment (6), insbesondere an einer einer Auslaufseite (36) des Durchflussmengenreglers (1) zugewandten Unterseite (37), eine Materialausnehmung (38) aufweist.

21. Durchflussmengenregler (1) nach einem der vorstehenden Ansprüche, **dadurch gekennzeichnet, dass** das Gehäuse (4) einstückig und/oder monolithisch ausgebildet ist, insbesondere derart dass Trennwände (22) und/oder Befestigungsmittel (10) und/oder Abstandhalter (25) und/oder Anlagekörper (28) und/oder Halteelemente (31) durch das Gehäuse (4) ausgebildet sind.

22. Durchflussmengenregler (1) nach einem der vorstehenden Ansprüche, **dadurch gekennzeichnet, dass** der Regelkörper (2) in einem Strömungsweg (46), zwischen einem Zulauf (39) und einem Ablauf (40) des Durchflussmengenreglers (1) angeordnet ist.

23. Durchflussmengenregler (1) nach einem der vorstehenden Ansprüche, **dadurch gekennzeichnet, dass** die Segmente (6) des Regelkörpers (2) durch ein Oberteil (48) und ein Unterteil (49) ausgebildet sind.

24. Durchflussmengenregler (1) nach einem der vorstehenden Ansprüche, **dadurch gekennzeichnet, dass** der Regelkörper (2) ein oder das Oberteil (48) und ein oder das Unterteil (49) aufweist, wobei das Oberteil (48) und das Unterteil (49) baugleich sind.

## Claims

1. Flow rate regulator (1) for setting a flow rate of a fluid, in particular of a liquid or gaseous medium, wherein the flow rate regulator (1) comprises a regulator body (2) and a regulator opening (3), wherein the regulator opening (3) is formed at least partially by a housing (4), wherein a clear opening dimension (5) of the regulator opening (3) can be modified by the regulator body (2) in dependence on a pressure acting on the regulator body (2), wherein the regulator body (2) forms at least a partial region of an edge (7) delimiting the regulator opening (3), wherein the regulator body (2) has at least two segments (6) which can be decoupled from each other and which can each be deformed in a pressure-dependent manner, **characterized in that** the at least two segments (6) have different resistances to pressure-dependent deformation.

2. Flow rate regulator (1) according to Claim 1, **characterized in that** the at least two segments (6) are decoupled by way of a notch (8) formed between them, and/or **in that** the regulator body (2) is of disc-shaped form.

3. Flow rate regulator (1) according to Claim 1 or 2, **characterized in that** a fastening means (10) on which the regulator body (2) is mounted and/or retained in the housing (4), preferably on which the regulator body (2) is deformably mounted on the housing (4) at least parallel to a longitudinal axis (11) of the flow rate regulator (1) and/or to a flow direction (12) of a fluid flowing through the flow rate regulator (1) during use, is formed in a receiving space (9), and/or **in that** the regulator body (2) has a connecting part (13) to which the individual segments (6) are connected and/or via which connecting part (13) the regulator body (2) is mounted in the housing (4), preferably wherein the connecting part (13) has an, in particular continuous, bearing opening (14) into which a or the fastening means (10) is inserted, further preferably wherein the fastening means (10) is designed as a pin (16) projecting from a receiving space base (15) .

4. Flow rate regulator (1) according to one of the preceding claims, **characterized in that** the at least two segments (6) are configured to set a flow rate in different pressure ranges, preferably wherein the at least two segments (6) differ in terms of their material thickness and/or in terms of their stiffness and/or in terms of their shape and/or in terms of the size of an impingement surface (17) thereof and/or in terms of their material.

5. Flow rate regulator (1) according to one of the preceding claims, **characterized in that** an edge (19) of at least one outlet opening (18) of the housing (4) forms a partial region of the edge (7) delimiting the regulator opening (3), preferably wherein the outlet opening (18) is arranged downstream of the regulator body (2) in the flow direction (12).

6. Flow rate regulator (1) according to one of the preceding claims, **characterized in that** a or the outlet opening (18) of the housing (4) is designed as a gap (20), in particular as a gap which runs around in a circumferential direction and/or which is annular, or as a plurality of interrupted gap sections (21), preferably wherein the gap (20) or the gap sections (21) extends/extend around a or the fastening means (10), in particular around the fastening means (10) formed in a centred manner in the housing (4).

7. Flow rate regulator (1) according to one of the preceding claims, **characterized in that** a partition (22) is arranged between the two segments (6).

8. Flow rate regulator (1) according to one of the preceding claims, **characterized in that** the flow rate regulator (1) comprises at least two partitions (22) which are in particular oriented parallel or obliquely to the flow direction (12) and which divide a or the receiving space (9), which is arranged upstream of a or the outlet opening (18) of the housing (4) in the flow direction (12) and in which the regulator body (2) is arranged within the housing (4), into at least two segment chambers (23) which are separated from one another, in which segment chambers (23) at least one segment (6) is arranged in each case, and/or **in that** the partitions (22) divide a or the outlet opening (18) of the housing (4) into at least two outlet opening sections (24) which are separated from one another, and/or **in that** the partitions (22) are formed with corresponding or different heights.

9. Flow rate regulator (1) according to one of the preceding claims, **characterized in that** at least one spacer (25), preferably arranged offset in the radial direction (41) with respect to a or the outlet opening (18) or a or the outlet opening section (24), is arranged in at least one segment chamber (23), said spacer being able to be impinged on in a pressure-dependent manner by the at least one segment (6) arranged in said segment chamber (23), in particular wherein, in the use position, the spacer (25) is used to define a spacing (26) between the segment (6) impinging on the spacer (25) and an impact surface (27) of the segment chamber (23) .

10. Flow rate regulator (1) according to one of the preceding claims, **characterized in that** at least one contact body (28) is arranged in at least one segment chamber (23), said contact body having a contact surface (29) which is oriented obliquely relative to a or the longitudinal axis (11) and/or to a or the radial direction (41) and which can be impinged on by a segment (6) arranged in the segment chamber (23), in particular if the segment (6) is deformed in a pressure-dependent manner, preferably wherein, when a segment (6) is impinging on the contact surface (29), a seal can be produced or is produced between the segment (6) and the contact body (28) in the region of the impingement.

11. Flow rate regulator (1) according to one of the preceding claims, **characterized in that** a or the contact body (28) divides a or the outlet opening section (24) of at least one segment chamber (23) into two partial openings (30) which are separated from one another.

12. Flow rate regulator (1) according to one of the preceding claims, **characterized in that** the regulator body (2) has at least four segments (6) which are decoupled from one another and which can each be deformed in a pressure-dependent manner.

13. Flow rate regulator (1) according to one of the preceding claims, **characterized in that** the segment chambers (23) each have an impact surface (27) arranged obliquely and/or perpendicularly to the longitudinal axis (11) of the flow rate regulator (1), preferably wherein the impact surfaces (27) of the at least two segment chambers (23) are arranged in offset and/or stepped fashion relative to one another in the longitudinal direction.

14. Flow rate regulator (1) according to one of the preceding claims, **characterized in that** the flow rate regulator (1) comprises a plurality of retaining elements (31) by means of which a respective groove (32) is formed, which is in particular open counter to the flow direction (12) and into which the regulator body (2) is inserted, and/or **in that** the retaining elements (31) are arranged in a notch (8) of the regulator body (2) between two segments (6).

15. Flow rate regulator (1) according to one of the preceding claims, **characterized in that** the at least two segments (6) are integrally connected, or **in that** the at least two segments (6) are formed separately from each other.

16. Flow rate regulator (1) according to one of the preceding claims, **characterized in that** the housing (4) has a circumferential wall (33) which outwardly delimits a or the receiving space (9) and/or the segment chambers (23) in the radial direction (41).

17. Flow rate regulator (1) according to one of the preceding claims, **characterized in that** a placeholder element (34) is formed or placed on a or the receiving space base (15) and/or on a spacer top side (42) and/or on a contact body top side (43), preferably wherein the placeholder element (34) is formed as at least one projection (44) and/or as at least one ridge (45).

18. Flow rate regulator (1) according to one of the preceding claims, **characterized in that** the regulator body (2) is produced from an elastic and/or compressible material.

19. Flow rate regulator (1) according to one of the preceding claims, **characterized in that** at least one segment (6) has a step (35), in particular in such a way that the segment (6) has a stepped impingement surface (17).

20. Flow rate regulator (1) according to one of the preceding claims, **characterized in that** at least one segment (6) has, in particular on a bottom side (37) facing an outlet side (36) of the flow rate regulator (1), a material recess (38).

21. Flow rate regulator (1) according to one of the preceding claims, **characterized in that** the housing (4) is designed integrally and/or monolithically, in particular in such a way that partitions (22) and/or fastening means (10) and/or spacers (25) and/or contact bodies (28) and/or retaining elements (31) are formed by the housing (4).

22. Flow rate regulator (1) according to one of the preceding claims, **characterized in that** the regulator body (2) is arranged in a flow path (46) between an inlet (39) and an outlet (40) of the flow rate regulator (1).

23. Flow rate regulator (1) according to one of the preceding claims, **characterized in that** the segments (6) of the regulator body (2) are formed by an upper part (48) and a lower part (49).

24. Flow rate regulator (1) according to one of the preceding claims, **characterized in that** the regulator body (2) comprises a or the upper part (48) and a or the lower part (49), wherein the upper part (48) and the lower part (49) are of identical construction.

## Revendications

1. Régulateur de débit (1) pour le réglage d'un débit d'un fluide, en particulier d'un milieu liquide ou gazeux, lequel régulateur de débit (1) comporte un corps de régulateur (2) et un orifice de régulateur (3), dans lequel l'orifice de régulateur (3) est constitué au moins partiellement par un boîtier (4), dans lequel une ouverture intérieure (5) de l'orifice de régulateur (3) peut être modifiée par le corps de régulateur (2) en fonction d'une pression s'exerçant sur le régulateur (2), dans lequel le corps de régulateur (2) forme au moins une zone partielle d'une bordure (7) délimitant l'orifice de régulateur (3), et dans lequel le corps de régulateur (2) présente au moins deux segments (6) déformables en fonction de la pression découplés entre eux, **caractérisé en ce que** les au moins deux segments (6) présentent des résistances différentes à une déformation en fonction de la pression.

2. Régulateur de débit (1) selon la revendication 1, **caractérisé en ce que** les au moins deux segments (6) sont découplés par une échancrure (8) formée entre eux et/ou que le corps de régulateur (2) est configuré en forme de disque.

3. Régulateur de débit (1) selon la revendication 1 ou 2, **caractérisé en ce que** dans un réceptacle (9) est formé un moyen de fixation (10) sur lequel le corps de régulateur (4) est logé et/ou maintenu dans le boîtier (4), de préférence sur lequel le corps de régulateur (2) est logé de façon déformable dans le boîtier (4) au moins parallèlement à un axe longitudinal (11) du régulateur de débit (1) et/ou à une direction d'écoulement (12) d'un fluide traversant le régulateur de débit (1) en mode de fonctionnement, et/ou que le corps de régulateur (2) présente un élément de liaison (13) avec lequel les différents segments (6) sont reliés et/ou par lequel élément de liaison (13) le corps de régulateur (2) est logé dans le boîtier (4), l'élément de liaison (13) présentant de préférence un orifice de logement (14), en particulier traversant, dans lequel un ou le moyen de fixation (10) est inséré, le moyen de fixation (10) étant plus préférablement configuré comme un tenon (16) dépassant du fond (15) du réceptacle.

4. Régulateur de débit (1) selon une des revendications précédentes, **caractérisé en ce que** les au moins deux segments (6) sont configurés pour réguler un débit sur des plages de pression différentes, de préférence dans lequel les au moins deux segments (6) se différentient par leur épaisseur de matériau et/ou par leur rigidité et/ou par leur forme et/ou par la taille d'une surface de sollicitation (17) et/ou par leur matériau.

5. Régulateur de débit (1) selon une des revendications précédentes, **caractérisé en ce qu'**une bordure (19) d'au moins un orifice d'évacuation (18) du boîtier (4) forme au moins une zone partielle de la bordure (7) délimitant l'orifice de régulateur (3), de préférence dans lequel l'orifice d'évacuation (18) est disposé en aval du corps de régulateur (2) dans la direction d'écoulement (12).

6. Régulateur de débit (1) selon une des revendications précédentes, **caractérisé en ce qu'**un ou l'orifice d'évacuation (18) du boîtier (4) est configuré comme une fente (20), en particulier circulant dans une direction de circulation et/ou annulaire, ou sous la forme de plusieurs segments de fente (21) discontinus, de préférence dans lequel la fente (20) ou les segments de fente (21) s'étend/s'étendent autour d'un ou du moyen de fixation (10), en particulier autour du moyen de fixation (10) centré dans le boîtier (4).

7. Régulateur de débit (1) selon une des revendications précédentes, **caractérisé en ce qu'**une paroi de séparation (22) est disposée entre les deux segments (6).

8. Régulateur de débit (1) selon une des revendications précédentes, **caractérisé en ce que** ce régulateur de débit (1) comprend au moins deux parois de séparation (22), orientées en particulier parallèlement ou obliquement à la direction d'écoulement (12), qui divisent un ou le réceptacle (9) disposé en amont d'un ou de l'orifice d'évacuation (18) du boîtier (4) dans la direction d'écoulement (12), dans lequel le corps de régulateur (2) est disposé à l'intérieur du boîtier (4), en au moins deux chambres à segments (23) séparées entre elles, au moins un segment (6) étant disposé dans lesdites chambres à segments (23), et/ou que les parois de séparation (22) divisent un ou l'orifice d'évacuation (18) du boîtier (4) en au moins deux segments d'orifice d'évacuation (24) séparés entre eux et/ou que les parois de séparation (22) sont formées avec des hauteurs concordantes ou différentes.

9. Régulateur de débit (1) selon une des revendications précédentes, **caractérisé en ce que** dans au moins une chambre à segments (23) est agencé au moins un écarteur (25), disposé de préférence dans une direction radiale (41) par rapport à un ou l'orifice d'écoulement (18) ou décalé par rapport à un ou au segment d'orifice d'évacuation (24), qui peut être sollicité en fonction de la pression par l'au moins un segment (6) disposé dans cette chambre à segments (23), une distance (26) entre le segment (6) sollicitant l'écarteur (25) et une surface d'impact (27) de la chambre à segments (23) étant en particulier définie au moyen de l'écarteur (25) en position d'utilisation.

10. Régulateur de débit (1) selon une des revendications précédentes, **caractérisé en ce que** dans au moins une chambre à segments (23) est disposé au moins un corps d'appui (28) qui présente une surface d'appui (29) orientée obliquement par rapport à un ou l'axe longitudinal (11) et/ou à une ou la direction radiale (41) qui peut être sollicitée par un segment (6) disposé dans la chambre à segments (23), en particulier quand le segment (6) est déformé en fonction de la pression, un joint étanche entre le segment (6) et le corps d'appui (28) pouvant être ou étant de préférence produit dans la zone de la sollicitation en cas de sollicitation de la surface d'appui (29) par un segment (6).

11. Régulateur de débit (1) selon une des revendications précédentes, **caractérisé en ce qu'**un ou le segment d'orifice d'évacuation (24) d'au moins une chambre à segments (23) est divisé par un ou le corps d'appui (28) en deux orifices partiels (30) séparés entre eux.

12. Régulateur de débit (1) selon une des revendications précédentes, **caractérisé en ce que** le corps de régulateur (2) présente au moins quatre segments (6) déformables en fonction de la pression et découplés entre eux.

13. Régulateur de débit (1) selon une des revendications précédentes, **caractérisé en ce que** les chambres à segments (23) présentent chacune une surface d'impact (27) disposée obliquement et/ou perpendiculairement à l'axe longitudinal (11) du régulateur de débit (1), les surfaces d'impact (27) des au moins deux chambres à segments (23) étant de préférence décalées entre elles et/ou échelonnées dans la direction longitudinale.

14. Régulateur de débit (1) selon une des revendications précédentes, **caractérisé en ce que** ce régulateur de débit (1) comprend plusieurs éléments de maintien (31) formant chacun une rainure (32), ouverte en particulier à l'encontre de la direction d'écoulement (12), dans laquelle le corps de régulateur (2) est inséré, et/ou que ces éléments de maintien (31) sont disposés dans une échancrure (8) du corps de régulateur (2) entre deux segments (6).

15. Régulateur de débit (1) selon une des revendications précédentes, **caractérisé en ce que** les au moins deux segments (6) sont reliés d'une seule pièce ou que les au moins deux segments (6) sont séparés entre eux.

16. Régulateur de débit (1) selon une des revendications précédentes, **caractérisé en ce que** le boîtier (4) présente une paroi périphérique (33) qui délimite un ou le réceptacle (9) et/ou les chambres à segments (23) vers l'extérieur dans la direction axiale (41).

17. Régulateur de débit (1) selon une des revendications précédentes, **caractérisé en ce qu'**un élément de maintien d'écartement (34) est formé ou posé sur un ou le fond (15) du réceptacle et/ou sur une face supérieure (42) de l'écarteur et/ou sur une face supérieure (43) du corps d'appui, l'élément de maintien d'écartement (34) étant de préférence configuré comme au moins une pointe (44) et/ou comme au moins une arête (45).

18. Régulateur de débit (1) selon une des revendications précédentes, caractérisé en ce le corps de régulateur (2) est fabriqué dans une matière élastique et/ou compressible.

19. Régulateur de débit (1) selon une des revendications précédentes, **caractérisé en ce qu'**au moins un segment (6) présente un échelon (35), en particulier de sorte que ce segment (6) présente une surface de sollicitation (17) échelonnée.

20. Régulateur de débit (1) selon une des revendications précédentes, **caractérisé en ce qu'**au moins un segment (6), en particulier sur une face inférieure (37) orientée vers un côté d'évacuation (36) du régulateur de débit (1), présente un évidement de matériau (38).

21. Régulateur de débit (1) selon une des revendications précédentes, **caractérisé en ce que** le boîtier (4) est constitué d'une pièce et/ou de façon monolithique, en particulier de sorte que des parois de séparation (22) et/ou des moyens de fixation (10) et/ou des écarteurs (25) et/ou des corps d'appui (28) et/ou des éléments de maintien (31) sont formés par le boîtier (4).

22. Régulateur de débit (1) selon une des revendications précédentes, **caractérisé en ce que** le corps de régulateur (2) est disposé dans une voie d'écoulement (46), entre une admission (39) et une évacuation (40) du régulateur de débit (1).

23. Régulateur de débit (1) selon une des revendications précédentes, **caractérisé en ce que** les segments (6) du corps de régulateur (2) sont formés d'une partie supérieure (48) et d'une partie inférieure (49).

24. Régulateur de débit (1) selon une des revendications précédentes, caractérisé en ce le corps de régulateur (2) présente une ou la partie supérieure (48) et une ou la partie inférieure (49), la partie supérieure (48) et la partie inférieure (49) étant de construction identique.
